# EUROPÄISCHE PATENTSCHRIFT

(11) **EP 4 037 859 B1**
(45) Veröffentlichungstag und Bekanntmachung des Hinweises auf die Patenterteilung: **10.05.2023**
(21) Anmeldenummer: 20780642.3
(22) Anmeldetag: 23.09.2020
(51) Int. Cl.: B23F 1/04, B23F 23/12, G05B 19/18, G05B 19/404, B23F 5/16, B23F 21/04, B23F 21/28

(54) **VERFAHREN DER SCHNEIDENDEN ERZEUGUNG ODER BEARBEITUNG EINER JEWEILS GLEICHEN VERZAHNUNG AN MEHREREN WERKSTÜCKEN SOWIE MASCHINENGRUPPE UND STEUERPROGRAMM DAFÜR**
METHOD FOR PRODUCING OR MACHINING, BY CUTTING, AN IDENTICAL SET OF TEETH ON EACH OF A PLURALITY OF WORKPIECES, AND MACHINE GROUP AND CONTROL PROGRAM THEREFOR
PROCÉDÉ DE PRODUCTION OU D'USINAGE, PAR DÉCOUPE, D'UN ENSEMBLE IDENTIQUE DE DENTS SUR CHAQUE PIÈCE D'UNE PLURALITÉ DE PIÈCES, ET GROUPE DE MACHINES ET PROGRAMME DE COMMANDE ASSOCIÉS

(30) Priorität: 30.09.2019 DE 102019006809
(43) Veröffentlichungstag der Anmeldung: 10.08.2022
(73) Patentinhaber: GLEASON-PFAUTER MASCHINENFABRIK GMBH, 71636 Ludwigsburg (DE)
(72) Erfinder: KRESCHEL, Jürgen, 71282 Hemmingen (DE)
(74) Vertreter: Leinweber & Zimmermann
(86) Internationale Anmeldenummer: PCT/EP2020/076635
(87) Internationale Veröffentlichungsnummer: WO 2021/063782

(56) Entgegenhaltungen:
- EP-A1- 1 084 786
- EP-A1- 2 537 615
- EP-A1- 3 456 453
- DE-A1-102017 011 978
- US-A- 4 115 956

## Beschreibung

Die Erfindung betrifft ein Verfahren der schneidenden Erzeugung oder Bearbeitung einer jeweils gleichen Verzahnung an mehreren, insbesondere wenigstens 4 Werkstücken einer Werkstück-Charge auf einer oder mehreren Verzahnungsmaschine(n) mit einem eine Verzahnung mit Spanflächen und einer Drehachse aufweisenden Verzahnungswerkzeug im abwälzenden Bearbeitungseingriff, bei dem im Falle einer festgestellten oder zu erwartenden Abweichung einer Verzahnung von dem für sie angestrebten Zahnprofil eine dieser Abweichung entgegenwirkende Gegenmaßnahme bestimmt und die Erzeugung/Bearbeitung weiterer Werkstücke dieser Werkstück-Charge unter Anwendung der Gegenmaßnahme fortgesetzt wird. Ein derartiges Verfahren gemäß dem Oberbegriff des Anspruchs 1 ist aus dem Dokument EP 2 537 615 A1 bekannt. Eine Maschinengruppe zur Ausführung des Verfahrens und ein Steuerprogramm zur Steuerung der Maschinengruppe sind aus dem Dokument DE 10 2017 011978 A1 bekannt.

Derartige Verfahren und Gegenmaßnahmen sind bekannt. So kann es immer wieder vorkommen, dass für bestimmte Werkstückverzahnungen ausgelegte Verzahnungswerkzeuge nicht genau das Zahnprofil an der Werkstückverzahnung erzeugt, das angestrebt wird. Beispielsweise wird beim Wälzschälen einer Verzahnung an der linken und/oder rechten Zahnflanke eine zu hohe Profilwinkelabweichung festgestellt, etwa durch Vermessen eines ersten oder mehrerer erster Werkstücke einer Werkstück-Charge. Bei einer nur geringen Werkstückanzahl könnte daran gedacht werden, Gegenmaßnahmen erst bei einer späteren Hart-Feinbearbeitung nach einem zwischenzeitlichen Härten der Werkstücke vorzunehmen, was aber insbesondere bei höheren Stückzahlen einer Werkstück-Charge zu einer erheblichen Belastung des nachgeordneten Hart-Feinbearbeitungsverfahrens führt, und ggf. bei zu starken Abweichungen danach nur schwer zu kompensieren wäre.

Daher reagiert man in der Technik gerade bei größeren Werkstück-Chargen noch bei der Bearbeitung selbst, indem für die Bearbeitung nachfolgender Werkstücke der Werkstück-Charge bereits eine Gegenmaßnahme angewandt wird, um diese nachfolgenden Werkstücke näher an das angestrebte Zahnprofil zu bringen.

Dazu wird die Flexibilität und die Bearbeitungsgenauigkeit moderner CNC-gesteuerter Verzahnungsmaschinen genutzt, indem durch Maschinenachskorrekturen eine der festgestellten Abweichung entgegenwirkende Modifizierung des Bearbeitungseingriffs eingestellt wird. Beispielsweise kann im Falle des Wälzschälens die Schwenkachse der Wälzschälmaschine auf einen modifizierten Achskreuzwinkel der Werkzeugdrehachse gegenüber der Werkstückdrehachse eingestellt werden, oder beispielsweise über einen Tangentialschlitten ein Offset der Bearbeitungsposition eingestellt werden. Für weitere Einzelheiten betreffend die Zusammenhänge dieser Gegebenheiten beim Wälzschälen wird auf die EP 2537615 A1 verwiesen, auf die diese Anmeldung bezüglich dieser Aspekte, der Schneidverhältnisse und der Kinematik des Wälzschälens, Bezug nimmt. Dies erlaubt ein äußerst flexibles Korrekturverfahren, und entsprechende, die erforderlichen Maschinenachsänderungen eigenständig berechnende Steuerungen sind daher bei modernen CNC-Maschinen zahlreicher Hersteller implementiert.

Der Erfindung liegt die Aufgabe zugrunde, ein Verfahren der eingangs genannten Art weitergehend zu verbessern, insbesondere hinsichtlich einer zufriedenstellenden Kombination aus Flexibilität und Werkzeug-Standzeit.

Diese Aufgabe wird von der Erfindung gemäß Anspruch 1 in verfahrenstechnischer Hinsicht im Wesentlichen dadurch gelöst, dass die Gegenmaßnahme wenigstens zum Teil in einer durch eine an der Verzahnungsmaschine oder auf einer zur Maschinengruppe der Verzahnungsmaschine gehörenden Schleifmaschine ausgeführten Schleifbearbeitung bewirkten Änderung der Relativlage der Spanflächen bezüglich der Werkzeugdrehachse liegt.

Die Erfindung verlagert somit einen Teil, insbesondere einen überwiegenden Teil der Gegenmaßnahme von einer dynamischen Korrektur hinein in eine konstruktive Änderung des Werkzeugs, konkret in eine Änderung der Relativlage der Spanflächen bezüglich der Werkzeugdrehachse. Diese Spanflächen, erfindungsgemäß bevorzugt planare Spanflächen, sind in ihrer Lage zur Werkzeugdrehachse in einer typischen Gestaltung eines im Treppenschliff ausgeführten Schneidrads durch den Treppenwinkel, d.h. die Neigung der Spanfläche zur Ebene orthogonal zur Werkzeugdrehachse, in Umfangsrichtung gesehen, sowie durch einen ggf. von Null verschiedenen Kopfspanwinkel, d.h. der Neigung der Spanfläche gegenüber dieser Ebene in Richtung radial zur Werkzeugdrehachse bestimmt.

Erfindungsgemäß ist vorgesehen, dass diese Lage oder Lageorientierung der Spanflächen durch ein Umschleifen vor Ort geändert wird. Bevorzugt verbleibt das Verzahnungswerkzeug dabei zum Umschleifen in der Verzahnungsmaschine selbst aufgespannt. Durch das erfindungsgemäße Verfahren sind zur Annäherung der weiteren Werkstücke der Werkstück-Charge an das angestrebte Zahnprofil die oben erläuterten dynamischen Korrekturen nicht mehr oder jedenfalls nur noch in geringerem Umfang erforderlich, was dazu führt, dass das Verzahnungswerkzeug weiter in Maschinenachseinstellungen eingesetzt bleibt, die näher an den Maschinenachseinstellungen liegen, für die die Werkzeugauslegung mit der für das Verzahnungswerkzeug gewählten Konizität ausgelegt wurde, so dass im günstigsten Fall die effektiven Freiwinkel gänzlich erhalten bleiben. Auf diese Weise kann vermieden werden, dass sich Prozesskräfte über die Lebensdauer des Verzahnungswerkzeugs verlagern, was als ein die Belastung der Verzahnungswerkzeuge erhöhender und entsprechend die Werkzeug-Standzeit verringernder Faktor erkannt wurde.

Die Flexibilität des Verfahrens bleibt durch das Umschleifen des Verzahnungswerkzeugs vor Ort dennoch, allerdings unter Inkaufnahme der für das Umschleifen benötigten Zeit und der dafür benötigten Maschinerie, erhalten.

Das Verfahren eignet sich für kleinere Werkstückchargen mit 4 oder mehr, 10 oder mehr, auch 20 oder mehr Werkstücken wie auch für größere Werkstückchargen mit 50 oder mehr, auch 100 oder 200 oder mehr Werkstücken.

Die Situation, in der auf ein Umschleifen des Verzahnungswerkzeugs entschieden werden kann, kann unterschiedliche Gründe haben. So könnte man im Verlauf der regulären Lebensdauer des Verzahnungswerkzeugs auftretende Fehler korrigieren, aber auch beispielsweise auf ein anderes angestrebtes Zahnprofil abstellen als beispielsweise die beabsichtigte Endgeometrie plus Aufmaß, wenn beispielsweise eine Tendenz an Härteverzügen beobachtet wird, die vorgreifend kompensiert werden soll, oder auch andere Fälle, in denen man beispielsweise noch Spielraum für eine bessere Annäherung an das angestrebte Zahnprofil sieht.

Bei dem Verzahnungswerkzeug handelt es sich bevorzugt um ein Schneidrad, nämlich insbesondere ein Schälrad für das Wälzschälen oder ein Schälrad für das Hartschälen einer bereits vorverzahnten und nach Vorverzahnung gehärteten Verzahnung, oder auch um eine Stoßrad zum Wälzstoßen von Verzahnungen. Als deren Grundwerkstoff könnte ein Hartmetall oder ein Powder-Metal-High-Speed-Steel (PM-HSS) Werkstoff, jedoch auch andere Werkstoffe herangezogen werden. In einigen Fällen kann eine die Verschleißfestigkeit erhöhende Beschichtung vorgesehen sein, beispielsweise AI, CrN oder jegliche andere dem Fachmann hierfür gängige Beschichtung wie etwa TiN.

In einer bevorzugten Verfahrensgestaltung ist vorgesehen, dass das Verzahnungswerkzeug zwischen seiner Schleifbearbeitung und der Fortsetzung seines Einsatzes keiner Beschichtung mit einer Verschleißfestigkeit erhöhenden Schicht mehr ausgesetzt wird wie ansonsten nach beispielsweise einem bloßen Nachschärfen in der Technik üblich. Auf diese Weise ist ein zeitaufwändiges Beschichtungsverfahren nicht mehr vorgesehen und wirkt nicht mehr zeitverzögernd. So ist insgesamt bevorzugt, dass das Verzahnungswerkzeug nach seinem Umschleifen tendenziell eher rasch wieder einsatzbereit ist und insbesondere zum Einsatz kommt, bevorzugt innerhalb von wenigstens 24 Stunden, weiter bevorzugt innerhalb von 12 Stunden, oder sogar innerhalb von 6 Stunden. Verfügt man über mehrere gleiche Verzahnungswerkzeuge, kann die Bearbeitung auch mit einem dieser gleichen Werkzeuge, nach Umschleifen, fortgesetzt werden.

Bevorzugt wird der Einsatz des Verzahnungswerkzeugs an genau der gleichen Verzahnungsmaschine fortgesetzt, in größeren Anlagen mit mehreren insbesondere identischen Verzahnungsmaschinen, die parallel Werkstück-Chargen vom gleichen Typ bearbeiten, könnte der Einsatz jedoch auch auf einer solchen Parallelmaschine fortgesetzt werden.

In einer bevorzugten Verfahrensgestaltung werden bei der Schleifbearbeitung der Spanflächen diese auf einen modifizierten Kopfspanwinkel geschliffen, durch das Umschleifen also der Kopfspanwinkel geändert. Eine Verringerung des Kopfspanwinkels bewirkt eine Erhöhung des Profilwinkels bzw. Eingriffswinkels am Zahnprofil der Werkstückverzahnung, wohingegen umgekehrt eine Erhöhung des Kopfspanwinkels zu einer Verringerung des Profilwinkels an beiden Zahnflanken der Werkstückverzahnung führt (wenn im Zweiflankenverfahren gearbeitet wird). Ein diesbezügliches Umschleifen eignet sich somit besonders zur Korrektur oder Beeinflussung von Abweichungen, die an Links- und Rechtsflanke der Werkstückverzahnung überwiegend symmetrisch auftreten.

Weiter ist alternativ oder zusätzlich bevorzugt vorgesehen, dass bei der Schleifbearbeitung auf einen modifizierten Treppenwinkel geschliffen bzw. umgeschliffen wird. Dies führt zu einer asymmetrischen Beeinflussung an einer Flanke und der anderen Flanke der Werkstückverzahnung, wird beispielsweise durch Verringerung des Treppenwinkels ein Profilwinkel an der Linksflanke erhöht, würde dieser (im Zweiflankenverfahren) an der rechten Flankenseite nicht erhöht, sondern verringert. Entsprechend wirkt man bevorzugt über die Modifizierung des Treppenwinkels einem bezüglich der Abweichung an Links- und Rechtsflanke Asymmetrieanteil des Profilfehlers entgegen.

Veranschaulichend und vereinfachend gesprochen könnte man beispielsweise bei einer Profilwinkelabweichung von +5 an der Linksflanke und +1 an der Rechtsflanke der Werkstückverzahnung eine bezüglich der Linksflanke mit -2 wirkende Treppenwinkelmodifikation sowie eine mit -3 wirkende Modifikation des Kopfspanwinkels vornehmen. An der linken Flanke wirken diese Korrekturen additiv und wirken mit -5 der Profilwinkelabweichung von +5 entgegen, an der rechten Flanke wirkt die Treppenwinkelmodifikation der Kopfspanwinkelmodifikation entgegen, so dass die Gesamtmodifikation von -1 ebenfalls das +1 der Profilwinkelabweichung ausgleicht.

Das erfindungsgemäße Verfahren kann die oben erläuterten dynamischen Korrekturen weiterhin als ergänzende Gegenmaßnahme beinhalten. So ist durchaus vorgesehen, dass die Gegenmaßnahme neben der Änderung der Relativlage der Spanflächen noch eine dynamische Korrektur in Form von gegenüber den Maschinenachsbewegungen zur Herstellung/Bearbeitung der Verzahnung oder ursprünglich vorgesehenen Herstellung/Bearbeitung der Verzahnung mit der festgestellten Abweichung oder festzustellenden Abweichung modifizierten Maschinenachsbewegungen aufweist. Beispiele hierfür sind in der Beschreibungseinleitung bereits erwähnt, die auch für diese Weiterbildung der Erfindung zum Einsatz kommen können.

In diesem Zusammenhang ist bevorzugt vorgesehen, dass die dynamische Korrektur, von der die Maschinenachsen für den Bearbeitungseingriff steuernden Steuerung in Abhängigkeit der vorgenommenen Modifizierung der Spanflächen eigenständig berechnet wird. Beispielsweise erhält ein Maschinenbediener von der Maschinensteuerung bei getroffener Feststellung einer vorzunehmenden Gegenmaßnahme aus der Abweichung vom angestrebten Zahnprofil berechnete Korrekturwerte bzw. Zielwerte für den Umschliff des Verzahnungswerkzeugs. Daraufhin kann semiautomatisch oder automatisch die Schleifmaschine mit dem entsprechend gesteuerten Umschleifen beauftragt werden. Es ist jedoch auch denkbar, dass der Bediener auf einen geringeren Umschliff entscheidet, der nur zu einer teilweisen Behebung der Abweichung führen würde, und die verbleibende Abweichung über die dynamische Korrektur vorgenommen wird.

Ebenfalls ist es möglich, dass zwar die gesamte Abweichung über das Umschleifen korrigiert werden soll, zu einem ggf. späteren Zeitpunkt jedoch noch ein Korrekturbedarf festgestellt wird, der dynamisch korrigiert werden soll. In diesem Fall wird die Verzahnungsmaschine zur Bestimmung der erforderlichen Maschinenachskorrekturen die bereits vorher umgeschliffene Werkzeugkontur zugrundelegen und nicht die ursprüngliche Werkzeugkontur vor dem Umschleifen.

Wie oben bereits angedeutet, kann das Umschleifen des Verzahnungswerkzeugs auf einer zur Maschinengruppe der Verzahnungsmaschine gehörenden Schleifmaschine ausgeführt werden, etwa auf einer im Maschinenverbund mit der Verzahnungsmaschine stehenden Schleifmaschine. Jedenfalls sollten die Steuerungen, sofern getrennt vorgesehen, bevorzugt verknüpft sein, um einen Datenaustausch hinsichtlich der oben erläuterten Umschleifparameter zu erlauben. In einer bevorzugten Ausgestaltung könnte das Verzahnungswerkzeug über ein Werkzeugaustauschsystem oder anderweitig auf die Schleifmaschine verbracht werden. In einer nochmals bevorzugteren Ausführungsform jedenfalls in diesem Falle einer die Werkstück-Charge allein bearbeitenden Verzahnungsmaschine kann das Umschleifen des Verzahnungswerkzeugs erfolgen, ohne dass dieses aus dem Werkzeugkopf der Verzahnungsmaschine ausgespannt werden muss. In einer diesbezüglich bevorzugten Verfahrensgestaltung kann eine Maschinenachse des Bearbeitungseingriffs zur Positionierung des Verzahnungswerkzeugs bei dessen Schleifbearbeitung herangezogen werden.

In vorrichtungstechnischer Hinsicht ist die Erfindung durch eine entsprechende Maschinengruppe gemäß Anspruch 11 mit einer Steuerung gemäß den obigen Aspekten unter Schutz gestellt sowie durch das Steuerprogramm gemäß Anspruch 14 selbst.

Die Vorteile der erfindungsgemäßen vorrichtungstechnischen Realisierung ergeben sich aus den oben erläuterten Vorteilen der Verfahrensaspekte.

In einem zusätzlichen Aspekt kann die Schleifbarkeit vor Ort zusätzlich dazu herangezogen werden, das Verzahnungswerkzeug nachzuschleifen, d.h. einen Schleifvorgang der Spanflächen vorzunehmen, bei dem sich die Lage der Spanflächen zur Werkzeugdrehachse nicht ändert, sondern nur ihre Höhe bezüglich eines Referenzpunktes auf der Werkzeugdrehachse.

Weitere Merkmale, Einzelheiten und Vorteile der Erfindung ergeben sich aus der nachfolgenden Beschreibung mit Bezug auf die beigefügten Figuren, von denen
- Fig. 1: eine Verzahnungsmaschine mit integrierter Schleifmaschine zeigt,
- Fig. 2: ein Verzahnungswerkzeug in Form eines Schneidrads im Treppenschliff zeigt,
- Fig. 3: schematisch einen Schleifeingriff an einem im Treppenschliff geschliffenen Werkzeug zeigt,
- Fig. 4: schematisch einen Schleifeingriff an einem Schneidrad mit Kopfspanwinkel zeigt,
- Fig. 5: eine Darstellung eines Treppenschliffs zeigt,
- Fig. 6: schematisch die Auswirkungen einer Modifizierung des Treppenwinkels zeigt,
- Fig. 7: eine Darstellung eines Kopfspanwinkels zeigt,
- Fig. 8: schematisch die Auswirkungen einer Modifizierung des Kopfspanwinkels zeigt, und
- Fig. 9: Profilwinkelabweichungen vor (a) und nach (b) Anwendung einer korrigierenden Spanflächenmodifizierung zeigt.

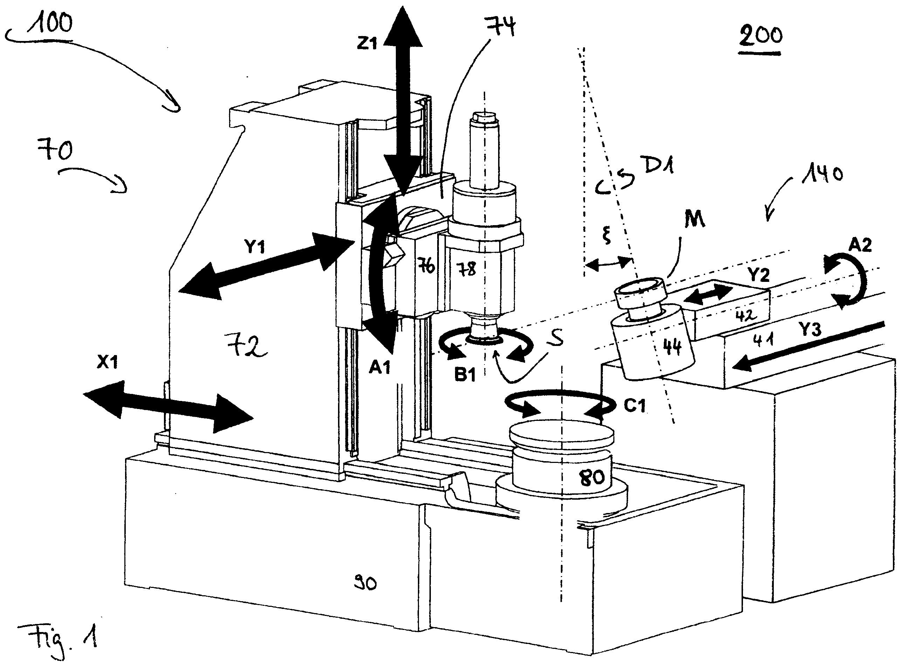

Bei der in Fig. 1 dargestellten Werkzeugmaschine handelt es sich um eine für eine Wälzschälbearbeitung mit einem Schälrad S ausgelegte Maschine 100. Werkstückseitig weist die Maschine 100 einen im Maschinenbett 90 drehbar angetrieben gelagerten Werkzeugtisch 80 auf, in dem ein in Fig. 1 nicht dargestelltes, zu bearbeitendes Werkstück, beispielsweise mit einer zu bearbeitenden Innenverzahnung, um die werkstückseitige Maschinendrehachse C1 drehbar aufspannbar ist.

Werkzeugseitig weist die Maschine 100 eine lineare Maschinenachse X1 für eine bezüglich des Werkstücks radiale Positionierbewegung des Werkzeugs auf, eine Achse Z1 für eine Bewegung des Werkzeugs entlang der Axialrichtung der Tischachse C1, und eine Achse Y1 für eine tangentiale Relativbewegung zwischen Werkzeug und Werkstück. Diese linearen Achsen X1, Z1 sind rechtwinklig zueinander und werden über eine Schlittenanordnung 70 realisiert, bei der ein Linearschlitten 72 für die X1-Bewegung einen Vertikalschlitten 74 für die Z1-Bewegung trägt. Der das Werkzeug S tragende Werkzeugkopf 78, der in diesem Ausführungsbeispiel auch einen CNC-Antrieb als Direktantrieb für die Werkzeugdrehung mit Drehachse B1 trägt, ist mit einem Linearschlitten 76 für die Tangentialbewegung Y1 beweglich. Der Tangentialschlitten 76 ist jedoch am Vertikalschlitten 74 drehbar gelagert mit Schwenkachse A1 angeordnet, so dass dessen Schlittenbewegung nur in der in der Figur 1 gezeigten Stellung horizontal verläuft, und ansonsten gegenüber der Z1-Achse um den eingestellten Schwenkwinkel A1 geneigt ist.

Die Verzahnungsmaschine 100 bildet zusammen mit einer ebenfalls in Fig. 1 dargestellten Schleifmaschine 140 einen Maschinenverbund 200. Die Schleifmaschine 140 könnte auch eine eigene Aufspannung für das umzuschleifende Werkzeug aufweisen, bevorzugt ist jedoch die beibehaltene Aufspannung auf der Werkzeugspindel der Verzahnungsmaschine 100.

Die Schleifmaschine 140 weist ein Bewegungssystem auf, mit dem ein Schleifwerkzeug M in schleifenden Bearbeitungseingriff mit dem in der Werkzeugaufspannung des Werkzeugkopfs 78 eingespannten Schälrad S gebracht werden kann, wobei zur Herstellung des Schleifeingriffs auch die werkzeugseitigen Linear- und Drehachsen eingesetzt werden (können). In dem dargestellten Ausführungsbeispiel ist das in diesem Ausführungsbeispiel in Form einer Topfscheibe gebildete Schleifwerkzeug M in einer orthogonal zur X1-Z1-Ebene stehenden Tangentialrichtung Y beweglich. Es kann somit bezüglich der Radialrichtung X1 seitlich in den Bearbeitungsraum eingebracht werden. Diese Beweglichkeit in Y-Richtung ist durch einen Doppelschlitten 41, 42 realisiert, von denen der untere Schlitten 41 für eine Positionierung mit Achse Y3 vorgesehen ist, während der obere Schlitten 42 für die Schleif-Hubbewegung vorgesehen ist. Zudem ist eine das Schleifwerkzeug M tragende und um die Achse D1 drehend antreibende Schleifspindel 44 in einer orthogonal zur Y-Richtung liegenden Ebene schwenkbar angeordnet (die Schwenkachse ist mit A2 bezeichnet), so dass sich in einer parallel zur X1-Z1-Ebene verlaufenden Ebene ein Winkel ξ zwischen der Axialrichtung der Drehachse D1 und der Achse Z1 (C1) einstellbar ist.

Denkbar sind auch Varianten, bei denen für die Schleif-Hubbewegung die Y1-Achse (ggf. in Kombination mit Z1) des Werkzeugkopfs 78 herangezogen wird und ggf. dann Achsen am Schleifkopf wie Y2 eingespart werden. Ebenfalls denkbar ist eine zusätzliche Achse X2 des Schleifkopfs parallel zur X1-Richtung, oder auch eine weitere Schwenkachse mit Schwenkachse X2.

ist nun für ein bereits vom Schälrad S bearbeitetes Werkstück festgestellt (etwa durch Vermessen auf einer nicht dargestellten Verzahnungsprüfmaschine), dass dessen Verzahnungsprofil von einem vorgegebenen gewünschten Verzahnungsprofil abweicht, wird dies signalisiert und, in diesem Ausführungsbeispiel entschieden, dass weitere Werkstücke derselben Werkstück-Charge erst nach Modifizierung des Schälrads S bearbeitet werden sollen, die der festgestellten Profilabweichung entgegenwirkt. Die (nicht dargestellte) Steuereinrichtung des Maschinenverbunds 200 berechnet, die für die Orientierung der Spanflächen (ihres Normalenvektors) benötigten Änderungen (in Treppenwinkel und/oder Kopfspanwinkel, und die Schleifmaschine 140 nimmt eine Schleifoperation am Schälrad S vor, um es entsprechend diesen Vorgaben zu modifizieren.

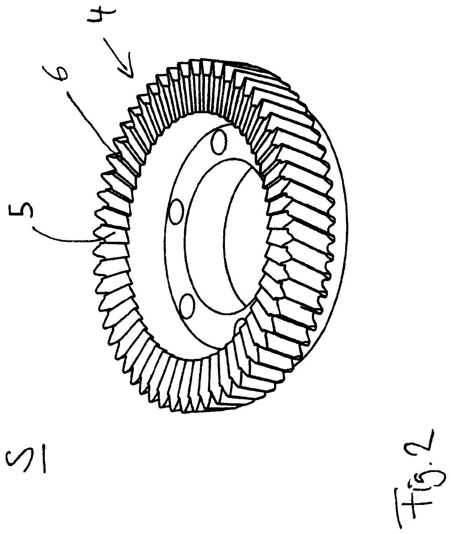

Dies wird im Folgenden für ein Schälrad S beschrieben, das im Treppenschliff ausgeführt ist (siehe auch Fig. 2) und einen von Null verschiedenen Kopfspanwinkel aufweist. In diesem Fall wird das Schleifwerkzeug M auf den modifizierten Treppenwinkel des Schälrads S eingeschwenkt mit Schwenkachse A2. Die Schwenkachse A1 des Schälrads S wird auf den modifizierten Kopfspanwinkel des Schälrads S eingeschwenkt. In dieser Einstellung verläuft eine Mittellinie einer (im indexierenden Verfahren) umzuschleifenden, in der bezüglich der Radialachse X1 90°-Position der Seite des Schleifwerkzeugs M zugewandten Spanfläche 5 horizontal. Bei der Schleif-Hubbewegung (Achse Y2) bewegt sich dann der Bearbeitungsbereich bei dem Schleifhub entlang der Spanfläche 5, wobei die Orientierung des schleifenden Bereichs der Topfscheibe M mit der Orientierung der modifizierten Spanfläche übereinstimmt, so dass die Spanfläche 5 entsprechend umgeschliffen werden kann. Es versteht sich, dass die Z1-Achse des Schälrads S für die Höheneinstellung des Bearbeitungseingriffs und die Zustellung eingesetzt werden kann, während die XY-Maschinenachsen der Positionierung dienen.

Durch die bezüglich der Radialachse X1 seitlichen Zuführung des Schleifwerkzeugs M werden maschinenseitig konkurrierende Platzbedarfansprüche vermieden. Zudem werden aufgrund der Parallelität von Schleifhub- und Zuführrichtung Vibrationen beim Umschleifen weitestgehend vermieden. Wenn auf diese Weise in indexierender Bearbeitung nacheinander alle Spanflächen 5 umgeschliffen sind, wird das Schleifwerkzeug M zurückgezogen und die Verzahnungsbearbeitung durch das Schälrad S kann wiederaufgenommen und fortgesetzt werden.

Die sich wegen der geänderten Schälradform aufgrund des Umschleifens ergebenden Änderungen werden in der Maschinensteuerung automatisch übernommen. Die Maschinensteuerung hat alle erforderlichen Informationen aus der in ihr ursprünglich hinterlegten Werkzeugauslegung und Kenntnis des bei dem Umschleifen vorgenommenen Abtrags über die Achspositionen der dabei eingesetzten Maschinenachsen. Sofern auf eine Korrekturmaßnahme allein durch Umschleifen entschieden wurde, erfolgt die fortgesetzte Bearbeitung mit der gleichen Maschinenachssteuerung wie vorher. Es kann jedoch auch vorgesehen sein, nur einen (insbesondere überwiegenden) Anteil der erforderlichen Gegenmaßnahme über das Umschleifen zu korrigieren. In diesem Fall berechnet die Maschinensteuerung automatisch in Abhängigkeit der Daten des umgeschliffenen Werkzeugs den dadurch noch nicht berücksichtigten Korrekturanteil und nimmt bezüglich dieses Korrekturanteils eine wie bislang im Stand der Technik übliche dynamische Korrektur durch eine Änderung der Maschinenachseinstellungen für den Bearbeitungseingriff vor, beispielsweise durch eine modifizierte Schwenkeinstellung (Achse A1) oder eine Außermittigkeit (Achse Y1).

Der Schleifhub könnte allerdings in alternativen Ausführungsformen auch in der X1-Maschinenrichtung erfolgen, wenn z.B. auf der Seite des Werkzeugs umgeschliffen wird, die dem Haupt-Maschinen-Ständer (70) am nächsten (0°-Position z.B. für Innenverzahnungen) oder am weitesten (180°-Position, z.B. für Außenverzahnungen) ist. In diesem Fall würde man bevorzugt die Schwenkachseinstellung des Werkzeugkopfes 78 auf den Bearbeitungsachskreuzwinkel eingestellt bleiben lassen. Beispielsweise könnte man, wenn die Werkstückbearbeitung die von Innenverzahnungen ist, wo in der Null°-Position gearbeitet wird, in der 180°-Position auf das Doppelte des gegenteiligen Achskreuzwinkels einstellen, um die Spanfläche 5 horizontal zu stellen. Es ist jedoch auch denkbar, den Achskreuzwinkel nicht derart zu ändern oder ihn in der Position der Bearbeitung zu belassen. Dann könnte vorgesehen werden, dass der Schleifkopf (44) noch eine weitere Schwenkachse erhält, denkbar ist auch das Heranziehen stark kegeliger Mantelflächen an einer nicht als Topfscheibe ausgeführten Schleifscheibe. Im Falle ohne Kopfspanwinkel wären dann radial horizontal verlaufende Spanflächen nachzuschleifen, im Falle vorhandener Kopfspanwinkel könnte beispielsweise durch eine Zusatzbewegung der Maschinenachse Z1 der Nachschleifkontakt aufrechterhalten bleiben. Hierfür könnte man bei Verwendung einer Topfscheibe die Achse A2 (Fig. 1) auf den Kopfspanwinkel einschwenken; dabei wird durch die Schwenkachse A2 des Nachschleifkopfes die gleiche Orientierung der zu schleifenden Fläche im Bearbeitungseingriff eingestellt.

Bevorzugt würde man bei dieser Variante das Umschleifen an der Seite des Werkzeugs S ausführen, die dem Haupt-Maschinen-Ständer (Schlittenanordung 70) am nächsten ist, um Platzkonkurrenz mit dem Werkstücktisch 80 zu vermeiden. Dies ist gerade bei einer Bearbeitung von Innenverzahnungen von Bedeutung, da dann über die Schwenkachse A1 des Werkzeugkopfs 78 nicht eingeschwenkt werden muss. Bei einer Außenverzahnung müsste in der 180°-Position umgeschliffen werden, wenn man nicht über die Schwenkachse A1 einschwenken will. In der 180°-Position sind dann oftmals günstigere Verhältnisse des verfügbaren Bauraums vorhanden. Insbesondere für den Fall, dass das Schälrad S keinen Kopfspanwinkel hat, kann auch daran gedacht werden, die Rotationsbewegung des Schleifwerkzeugs M über die bei der Bearbeitung die Werkstücke tragende Spindel (bei einer Konstellation ähnlich Fig. 1 den Maschinentisch 80) heranzuziehen und den Schleifhub über die Radialachse X1 auszuführen. Diese Variante ist zudem auch bei Kopfspanwinkel ungleich Null denkbar, indem die Radialachse X1 für den Schleifhub herangezogen wird, und ein aufeinander abgestimmter Offset des Eingriffsbereichs (gegenüber der 0° Position) mit Überlagerungsbewegungen Y1 und Z1 herangezogen wird.

Über die vorhandenen Maschinenachsen des in Fig. 1 dargestellten Maschinenverbunds einerseits für das Schälrad S und für das Schleifwerkzeug M können auch Überlagerungsvarianten ausgeführt werden, bei denen der Schleifhub in einer diagonalen Richtung (d.h., mit X- und Y-Richtungskomponente) erfolgt. Dann wird bevorzugt der Schwenkwinkel (A1-Achse) des Schälrads S in Abhängigkeit der Schleif-Hub-Richtung und des für das Schleifwerkzeug M eingestellten Winkels ξ passend zum modifizierten Kopfspanwinkel eingestellt.

Je nach Abmessung des herangezogenen Schleifwerkzeugs M ist es auch denkbar, auf die Realisierung eines Schleifhubs vollständig zu verzichten, nämlich wenn eine Spanfläche 5 bereits komplett abgedeckt wird. Das Umschleifen wäre dann ein Tauchschleifen.

Zur genauen Feststellung der Relativlage zwischen Schälrad S und Schleifwerkzeug M ist es möglich, das Schälrad S mit dem Schleifwerkzeug M in axialer Richtung wie auch in Umfangsrichtung anzutasten, um die genaue relative Höhenposition sowie relative Winkellage der Zähne des Werkzeugs S zum Schleifwerkzeug M zu ermitteln. Dies ist insbesondere nach einem Wechsel von Bearbeitungswerkzeug S und/oder Schleifwerkzeug M angezeigt. Denn ein Einschwenken des Schleifkopfs 78 ermöglicht es, das Werkzeug S im Bearbeitungsachskreuzwinkel zu belassen. Allerdings mag die Winkellage der Werkzeugzähne 4 aufgrund der vorangegangenen Bearbeitung und Überwachung der Maschinenachse B1 bereits bekannt sein. Für die Kontakterkennung kommt dabei eine Geräuscherkennung in Frage, wie auch eine Überwachung der Maschinenachsen beispielsweise über eine Drehmomentänderung an der Werkzeug- oder Werkstückspindel (B1/C1). Auch visuelle Erkennungsmethoden wie Funkenbildung könnten herangezogen werden.

Ein solches Antasten ist zudem ebenfalls dann bevorzugt, wenn das Schleifwerkzeug M selbst einem Abziehvorgang unterworfen wurde. Es kann vollautomatisch ablaufen, d.h. der Maschinenverbund 200 führt das Antasten selbständig aus, oder unter grober Vorpositionierung durch einen Bediener halbautomatisch oder alternativ Software-geführt, wenn der Bediener das Antasten über die Maschinenbedienoberfläche steuert. Auch eine rein manuelle Variante durch Antasten durch Achsbewegungen mittels Handsteuerung ist denkbar.

Wird beispielsweise mit Schälrädern gearbeitet, die keinen Treppenschliff aufweisen, kann neben dem intermittierenden Verfahren auch ein kontinuierliches Verfahren für das Umschleifen zum Einsatz kommen, beispielsweise mit einer Topfscheibe.

Sofern modifizierte Kopfspanwinkel von ungleich Null Grad erzeugt werden sollen, könnten die Spanflächen auch in Form von Kalotten geschliffen werden, mit einer in radialer Richtung etwas gekrümmten Oberfläche. Es könnte zum Erzeugen von Kopfspanwinkeln ungleich Null Grad auch noch eine zusätzliche, in Fig. 1 nicht dargestellte Schwenkachse des Werkzeugkopfs 78 eingesetzt werden.

Als Topfscheibe könnte grundsätzlich ein vergleichsweise flacher Topf herangezogen werden, oder auch eine Tellerscheibe. Im Vergleich zu einer vollen zylindrischen Scheibe wird bei einer Topfscheibe nur ein schmaler Bereich genutzt, der dann entsprechend auch einfacher und genauer abzurichten ist, was Vorteile im Abrichten des Schleifwerkzeugs mit sich bringt.

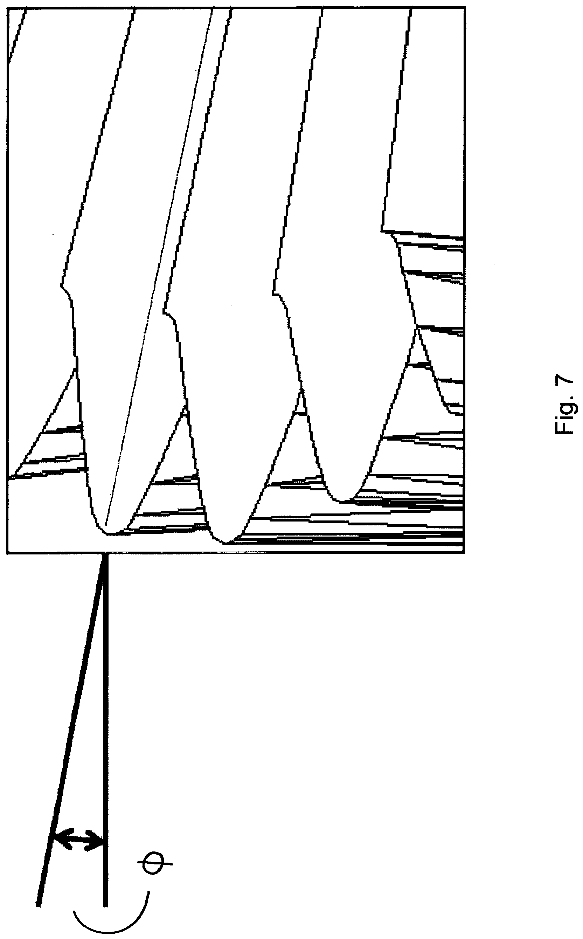

In Fig. 2 ist die Gestalt eines Schälrads S gezeigt, das auf der in Fig. 1 dargestellten Maschine 100 zum Einsatz gebracht werden kann. Man erkennt deutlich die im Treppenschliff ausgebildete Gestaltung der Werkzeugzähne 4 mit den im Treppenschliff geformten Spanflächen 5. Bei dem in Fig. 2 gezeigten Werkzeug S ist ein von Null verschiedener Kopfspanwinkel Φ (Fig. 7) vorhanden, die Spanflächen sind auch bezüglich der Radialrichtung geneigt.

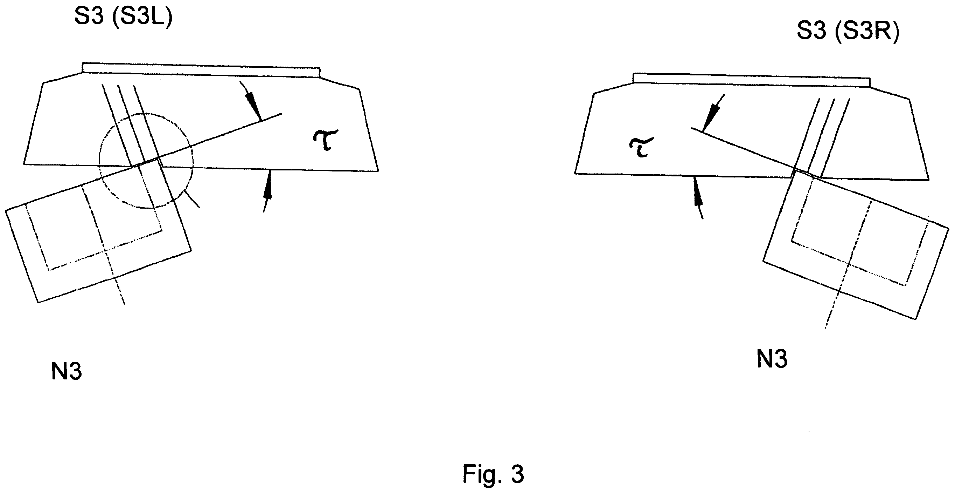

Fig. 3 stellt eine Eingriffssituation beim Umschleifen eines Schneidrads S3 mit einem Schleifwerkzeug M3 in Form einer topfartigen Schleifscheibe dar. Man erkennt, dass die Drehachsen von Schneidrad S3 und Schleifwerkzeug M3 passend zum modifizierten Treppenschliffwinkel τ aufeinander eingeschwenkt sind, einmal für rechts- und einmal für linkshändige Schneidgestaltung.

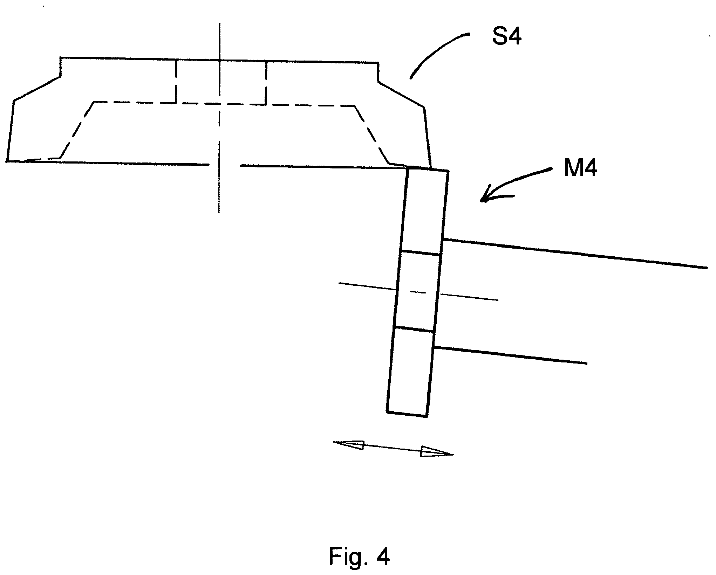

Fig. 4 zeigt schematisch eine Variante, bei der ein nicht mit Treppenschliff versehenes Schneidrad S4 von einer rotierenden zylindrischen Schleifscheibe M4 umgeschliffen wird. Hier ist erkennbar, wie die relative Winkellage der jeweiligen Drehachsen passend zu dem modifizierten Kopfspanwinkel des Schneidrads S4 eingestellt sind. Mit dem beidseitigen Pfeil wird eine Schleifhubbewegung angedeutet. Es könnte jedoch auch daran gedacht werden, beispielsweise eine Ausgleichsbewegung in Schneidradachsrichtung vorzunehmen und mit dem Schleifhub zu koppeln. Derartige zylindrische Schleifwerkzeuge wie M4 könnten auch im Falle eines Treppenschliffs eingesetzt werden, allerdings nicht in der in Fig. 4 gezeigten Umschleifposition, sondern in einer bezüglich der Schneidradachse 90°-Position (die eine Zwischenposition zwischen der schälkopfnahen 0°- und schälkopffernen 180°-Position ist) verdreht, ggf. mit Offset.

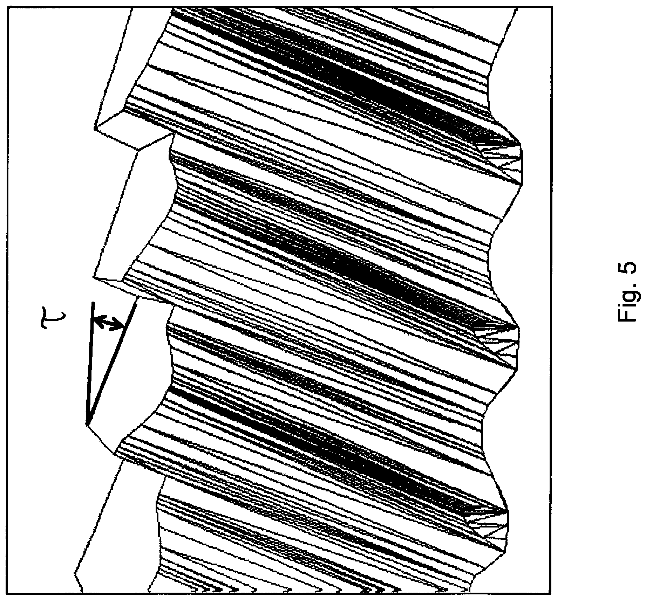

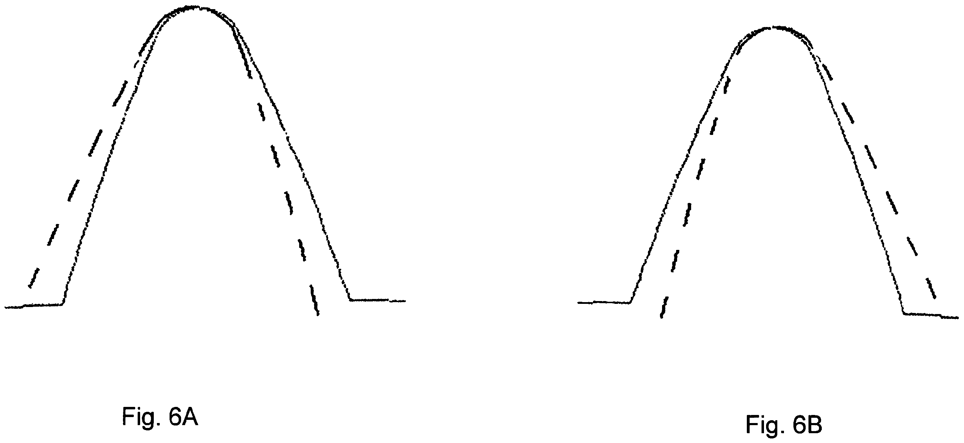

In Fig. 5 ist nochmals eine Darstellung eines Ausschnitts eines im Treppenschliff ausgeführten Schneidrads gezeigt, in der der Treppenwinkel eingezeichnet ist. In Fig. 6 ist erläuternd dargestellt, welche Modifizierungen des Profils der Werkstückverzahnung durch eine Änderung des Treppenwinkels hervorgerufen werden. So wird durch Verringerung des Treppenwinkels in der Darstellung von Fig. 5 der Profilwinkel auf der linken Seite erhöht und auf der rechten Seite verringert (Fig. 6A) und bei Erhöhung des Treppenwinkels ist der Einfluss umgekehrt (Fig. 6B). Der Einfluss des modifizierten Werkzeugs ist in gestrichelten Linien dargestellt. Ändert man am Werkzeug von rechtssteigend zu linkssteigend und umgekehrt, wirken die Einflüsse spiegelbildlich.

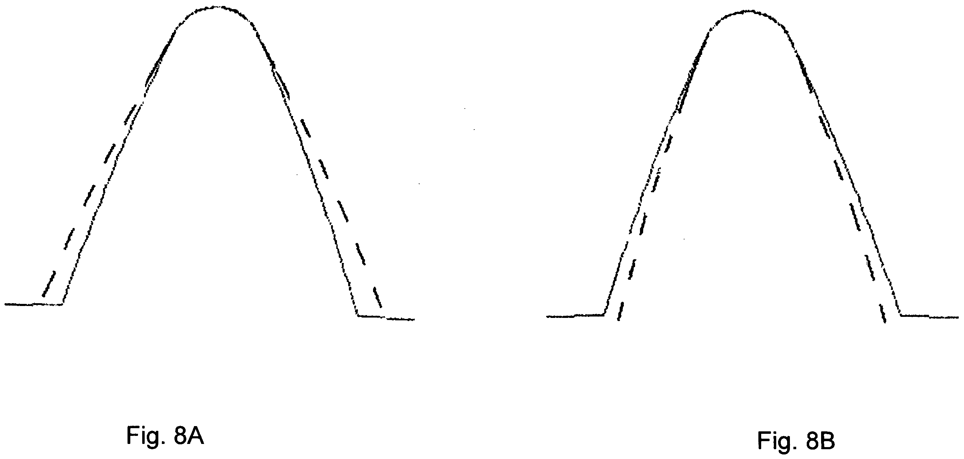

In Fig. 7 ist, wiederum für einen Ausschnitt des im Treppenschliff ausgeführten Schneidrads der Kopfspanwinkel ϕ dargestellt. Fig. 8 entspricht ähnlich wie Fig. 6 einer Darstellung des Einflusses der Modifizierung durch Umschleifen der Spanflächen 5 auf einen anderen Kopfspanwinkel. Hier bewirkt einer Verringerung des Kopfspanwinkels eine Erhöhung des Profilwinkels an beiden Seiten des Werkstücks (Fig. 8A), wohingegen eine Erhöhung des Kopfspanwinkels zu einer Verringerung des Profilwinkels an beiden Seiten führt (Fig. 8B).

Durch Überlagerung beider Korrekturen können somit sowohl ein symmetrischer Anteil einer Profilabweichung durch korrigierenden Einfluss über den Kopfspanwinkel wie auch ein asymmetrischer Anteil der Profilabweichung über den Einfluss des Treppenwinkels korrigiert werden.

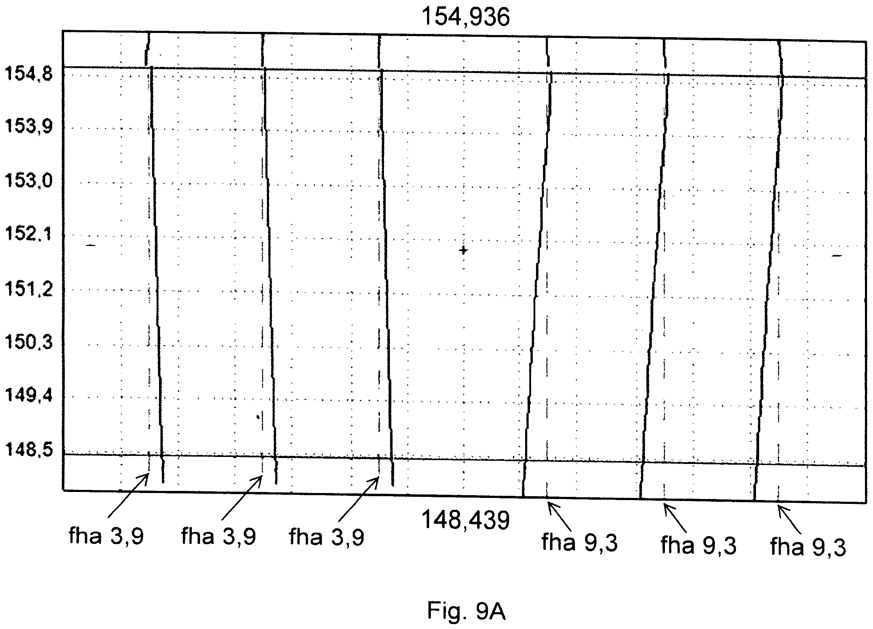

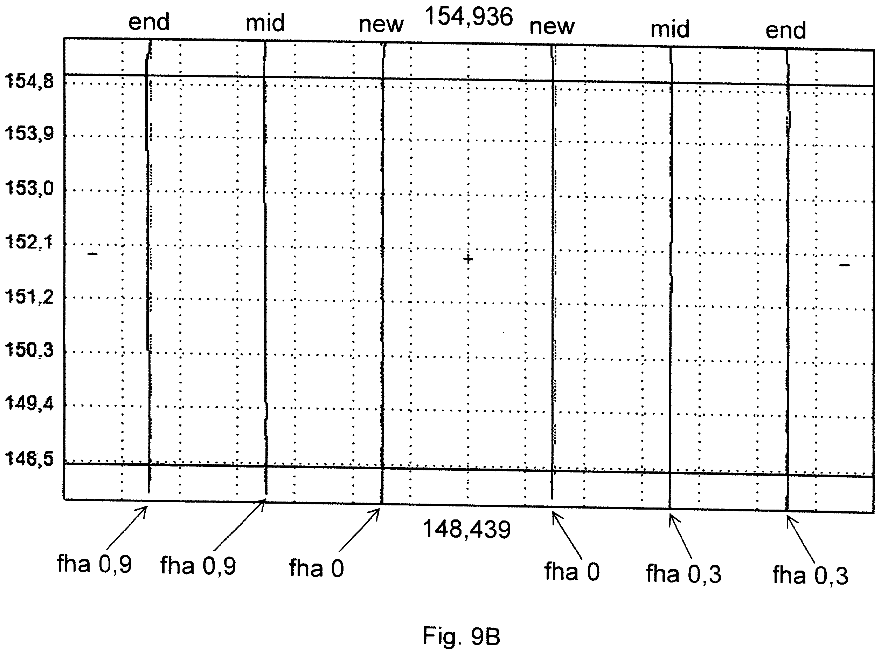

Hat beispielsweise eine Verzahnung einer Werkstück-Charge die folgenden Verzahnungsdaten: Modul 1,7 Eingriffswinkel 20° Zahnzahl 90, Schrägungswinkel 0 (gerade) Zahnbreite 25 mm; Fußkreisdurchmesser 155 mm; Kopfkreisdurchmesser 148 mm, und das zur Erzeugung dieser Verzahnung herangezogene Schneidrad die folgenden Parameter: Zahnzahl 54; Schrägungswinkel 10°, sowie einen Treppenwinkel von 10° und einen Kopfspanwinkel von 5°, und wird für dieses Schneidrad eine Profilabweichung von 3,9 µm links und 9,3 µm rechts festgestellt, wie in dem Messprofil von Fig. 9A dargestellt ist, wird in diesem konkreten Ausführungsbeispiel ein kompensierendes Umschleifen der Spanflächen des Schneidrads auf einen Kopfspanwinkel von 3° und einen Treppenwinkel von 12° ausgeführt. Aus dem Messprofil von Fig. 9B, das von einem mit dem modifizierten (korrigierten) Schneidrad erzeugt wurde, erkennt man die der Abweichung von Fig. 9A entgegengesetzte Wirkung des Umschleifens.

Wie aus Obigem ersichtlich, ist die Erfindung nicht auf die in den voranstehenden Beispielen konkret dargestellte Realisierung eingeschränkt.

## Patentansprüche

1. Verfahren der schneidenden Erzeugung oder Bearbeitung einer jeweils gleichen Verzahnung an mehreren, insbesondere wenigstens 4 Werkstücken einer Werkstück-Charge auf einer oder mehreren Verzahnungsmaschine(n) mit einem eine Verzahnung mit Spanflächen (5) und einer Drehachse aufweisenden Verzahnungswerkzeug (S) im abwälzenden Bearbeitungseingriff, bei dem im Falle einer festgestellten oder zu erwartenden Abweichung einer Verzahnung von dem für sie angestrebten Zahnprofil eine dieser Abweichung entgegenwirkende Gegenmaßnahme bestimmt und die Erzeugung/Bearbeitung weiterer Werkstücke dieser Werkstück-Charge unter Anwendung der Gegenmaßnahme fortgesetzt wird,
**dadurch gekennzeichnet, dass** die Gegenmaßnahme wenigstens zum Teil in einer durch eine an der Verzahnungsmaschine oder auf einer zur Maschinengruppe der Verzahnungsmaschine gehörenden Schleifmaschine (140) ausgeführten Schleifbearbeitung bewirkten Änderung der Relativlage (ϕ, τ) der Spanflächen (5) bezüglich der Werkzeugdrehachse liegt.

2. Verfahren nach Anspruch 1, bei dem das Verzahnungswerkzeug zwischen seiner Schleifbearbeitung und der Fortsetzung seines Einsatzes keiner Beschichtung mit einer Verschleißfestigkeit erhöhenden Schicht ausgesetzt wird.

3. Verfahren nach Anspruch 1 oder 2, bei dem die Spanflächen (5) des Verzahnungswerkzeugs (S) bei der Schleifbearbeitung auf einen modifizierten Kopfspanwinkel (ϕ) geschliffen werden.

4. Verfahren nach einem der vorhergehenden Ansprüche, bei dem die Spanflächen (5) des Verzahnungswerkzeugs (S) im Treppenschliff vorliegen und bei der Schleifbearbeitung auf einen modifizierten Treppenwinke (τ) geschliffen werden.

5. Verfahren nach Anspruch 4, bei dem der Bearbeitungseingriff im Zweiflankenverfahren erfolgt und die Modifizierung des Treppenwinkels (τ) einem bezüglich der Abweichung an Links- und Rechtsflanke Asymmetrieanteil des Profilfehlers entgegenwirkt.

6. Verfahren nach einem der Ansprüche 3 bis 5, bei dem der Bearbeitungseingriff im Zweiflankenverfahren erfolgt und die Modifizierung des Kopfspanwinkels (ϕ) einem bezüglich der Abweichung an Links- und Rechtsflanke Symmetrieanteil des Profilfehlers entgegenwirkt.

7. Verfahren nach einem der vorhergehenden Ansprüche, bei dem die Gegenmaßnahme neben der Änderung der Relativlage der Spanflächen noch eine dynamische Korrektur in Form von gegenüber den Maschinenachsbewegungen (A1, Y1) zur Herstellung/Bearbeitung der Verzahnung mit der festgestellten Abweichung modifizierten Maschinenachsbewegungen aufweist.

8. Verfahren nach Anspruch 7, bei dem die dynamische Korrektur von der die Maschinenachsen für den Bearbeitungseingriff steuernden Steuerung in Abhängigkeit der vorgenommenen Modifizierung der Spanflächen eigenständig berechnet wird.

9. Verfahren nach einem der vorhergehenden Ansprüche, bei dem eine Maschinenachse des Bearbeitungseingriffs zur Positionierung des Verzahnungswerkzeugs bei dessen Schleifbearbeitung herangezogen wird.

10. Verfahren nach einem der vorhergehenden Ansprüche, bei dem der Bearbeitungseingriff der des Wälzschälens oder Wälzstoßens ist.

11. Maschinengruppe mit einer mit einer Steuerung versehenen Verzahnungsmaschine (100) zum schneidenden Erzeugen und/oder Bearbeiten von Verzahnungen an Werkstücken im abwälzenden Bearbeitungseingriff, und mit einer Schleifmaschine (140) zum Schleifen der Spanflächen eines auf der Verzahnungsmaschine eingesetzten Verzahnungswerkzeugs, wobei eine Steuerung der Schleifmaschine mit der Steuerung der Verzahnungsmaschine verknüpft oder darin enthalten ist, **dadurch gekennzeichnet, dass** die Steuerungen in wenigstens einer Betriebsart der Maschinengruppe zur Steuerung gemäß eines Verfahrens nach einem der vorhergehenden Ansprüche ausgelegt sind.

12. Maschinengruppe nach Anspruch 11, bei der die Verzahnungsmaschine (100) und die Schleifmaschine (140) einen Maschinenverbund (200) bilden.

13. Maschinengruppe nach Anspruch 11 oder 12, bei der die Maschinengruppe noch eine Verzahnungsprüfmaschine zur Messung jedenfalls von Profilen und Profilfehlern von Verzahnungen aufweist.

14. Steuerprogramm, das, wenn auf einer Steuerung einer Verzahnungsmaschine einer Maschinenbaugruppe oder der Maschinenbaugruppe nach einem der Ansprüche 11 bis 13 ausgeführt wird, diese zur Ausführung eines Verfahrens nach einem der Ansprüche 1 bis 10 steuert.

## Claims

1. A method for producing or machining, by cutting, an identical set of teeth on several, in particular at least 4, workpieces of a workpiece batch on one or more gear-cutting machines having a gear-cutting tool (S) including a rotation axis and a set of teeth with rake faces (5), in rolling machining engagement, wherein in the event that a deviation of a set of teeth from the tooth profile sought for said set of teeth is detected or expected, a countermeasure that counteracts said deviation is determined and the production/machining of further workpieces in said workpiece batch continues using said countermeasure,
**characterised in that** the countermeasure consists, at least in part, in a change in the relative position (ϕ, τ) of the rake faces (5) with respect to the rotation axis of the tool, which is brought about by means of a grinding machining performed at the gear-cutting machine or on a grinding machine (140) that belongs to the machine group of the gear-cutting machine.

2. The method according to claim 1, wherein the gear-cutting tool is not subjected to any coating with a wear-resistance enhancing layer between its grinding machining and the continuation of its use.

3. The method according to claim 1 or 2, wherein the rake faces (5) of the gear-cutting tool (S) are ground to a modified axial rake angle (ϕ) during said grinding machining.

4. The method according to any of the preceding claims, wherein the rake faces (5) of the gear-cutting tool (S) are step-ground, and they are ground to a modified step angle (τ) during said grinding machining.

5. The method according to claim 4, wherein the machining engagement is carried out in a two-flank process and the modification of the step angle (τ) counteracts an asymmetry portion of the profile error relative to the deviation on the left and right flanks.

6. The method according to any of claims 3 to 5, wherein the machining engagement is carried out in a two-flank process and the modification of the axial rake angle (ϕ) counteracts a symmetry portion of the profile error relative to the deviation on the left and right flanks.

7. The method according to any of the preceding claims, wherein the countermeasure, in addition to changing the relative position of the rake faces, also includes a dynamic correction in the form of machine axis movements which are modified in relation to machine axis movements (A1, Y1) used for fabricating/machining the set of teeth with the detected deviation.

8. The method according to claim 7, wherein the dynamic correction is calculated independently by the controller controlling the machine axes for the machining engagement, based on the implemented modification of the rake faces.

9. The method according to any of the preceding claims, wherein a machine axis of the machining engagement is used to position the gear-cutting tool during its grinding machining.

10. The method according to any of the preceding claims, wherein the machining engagement is that of power skiving or gear shaping.

11. A machine group comprising: a gear-cutting machine (100), provided with a controller, for producing and/or machining, by cutting, sets of teeth on workpieces in rolling machining engagement, and a grinding machine (140) for grinding the rake faces of a gear-cutting tool used on the gear-cutting machine, wherein a controller of the grinding machine is connected to the controller of the gear-cutting machine or contained therein, **characterised in that** the controllers are configured for performing a control according to a method of one of the preceding claims in at least one operating mode of the machine group.

12. The machine group according to claim 11, wherein the gear-cutting machine (100) and the grinding machine (140) form a machine combination (200).

13. The machine group according to claim 11 or 12, wherein the machine group also includes a gear testing machine for measuring respective teeth profiles and teeth profile errors.

14. Control programme which, when executed on a controller of a gear-cutting machine of a machine group or of the machine group according to any one of claims 11 to 13, controls it to implement a method according to any one of claims 1 to 10.

## Revendications

1. Procédé de production ou d'usinage par taillage d'une denture respectivement identique sur plusieurs pièces à usiner, notamment au moins 4, d'un lot de pièces à usiner sur une ou plusieurs machines à tailler les dentures dotées d'un outil à tailler les dentures (S) présentant un axe de rotation et une denture pourvue de faces de coupe (5), en prise d'usinage par génération, dans le cadre duquel, si un écart est détecté ou attendu concernant une denture du profil de dent par rapport à celui envisagé, il est déterminé une contremesure visant à pallier cet écart et la production ou l'usinage d'autres pièces à usiner de ce lot de pièces à usiner se poursuit avec l'application de ladite contremesure,
**caractérisé en ce que** la contremesure consiste, au moins en partie, en un changement de la position relative (ϕ, τ) des faces de coupe (5) par rapport à l'axe de rotation de l'outil occasionné par une opération de rectification réalisée au niveau de la machine à tailler les dentures ou sur une machine à rectifier (140) faisant partie du groupe de machines auquel appartient la machine à tailler les dentures.

2. Procédé selon la revendication 1, dans lequel l'outil à tailler les dentures n'est soumis à aucun revêtement par couche visant à augmenter la résistance à l'usure entre sa rectification et la poursuite de son utilisation.

3. Procédé selon la revendication 1 ou 2, dans lequel les faces de coupe (5) de l'outil à tailler les dentures (S) sont rectifiées lors de l'opération de rectification pour former un angle de coupe axial (ϕ) modifié.

4. Procédé selon l'une quelconque des revendications précédentes, dans lequel les faces de coupe (S) de l'outil à tailler les dentures (S) sont meulées en gradins et sont rectifiées lors de l'opération de rectification pour présenter un angle de gradin (τ) modifié.

5. Procédé selon la revendication 4, dans lequel la prise d'usinage s'effectue selon un processus sur deux flancs et la modification de l'angle de gradin (τ) pallie une portion d'asymétrie de l'erreur de profil concernant l'écart au niveau des flancs gauche et droit.

6. Procédé selon l'une des revendications 3 à 5, dans lequel la prise d'usinage s'effectue selon un processus sur deux flancs et la modification de l'angle de coupe axial (ϕ) pallie une portion de symétrie de l'erreur de profil concernant l'écart au niveau des flancs gauche et droit.

7. Procédé selon l'une quelconque des revendications précédentes, dans lequel outre le changement de position relative des faces de coupe, la contremesure comprend encore une correction dynamique sous la forme de déplacements d'axes machine modifiés par rapport aux déplacements d'axes machine (Al, Y1) destinés à la fabrication ou à l'usinage de la denture présentant l'écart détecté.

8. Procédé selon la revendication 7, dans lequel la correction dynamique est calculée indépendamment par l'organe de commande commandant les axes machine en vue de la prise d'usinage, en fonction de la modification entreprise sur les faces de coupe.

9. Procédé selon l'une quelconque des revendications précédentes, dans lequel un axe machine de la prise d'usinage sert au positionnement de l'outil à tailler les dentures lors de sa rectification.

10. Procédé selon l'une quelconque des revendications précédentes, dans lequel la prise d'usinage est celle d'un power skiving ou taillage par outil-pignon.

11. Groupe de machines comprenant : une machine à tailler les dentures (100) dotée d'un organe de commande, destinée à produire et/ou usiner par taillage des dentures sur des pièces à usiner en une prise d'usinage par génération, et une machine à rectifier (140) destinée à rectifier les faces de coupe d'un outil à tailler les dentures employé sur la machine à tailler les dentures, un organe de commande de la machine à rectifier étant connecté à l'organe de commande de la machine à tailler les dentures ou contenu dans celui-ci, **caractérisé en ce que** les organes de commande sont conçus, dans au moins un mode d'exploitation du groupe de machines, pour effectuer une commande suivant un procédé selon l'une quelconque des revendications précédentes.

12. Groupe de machines selon la revendication 11, dans lequel la machine à tailler les dentures (100) et la machine à rectifier (140) forment un ensemble machine (200).

13. Groupe de machines selon la revendication 11 ou 12, dans lequel le groupe de machines présente en outre une machine d'inspection de dentures destinée à mesurer les profils et erreurs de profils de dentures respectifs.

14. Programme de commande qui, lorsqu'il est exécuté par un organe de commande d'une machine à tailler les dentures d'un groupe de machines ou du groupe de machines selon l'une des revendications 11 à 13, le commande de façon qu'il exécute un procédé selon l'une des revendications 1 à 10.
